# EUROPÄISCHE PATENTANMELDUNG

(11) **EP 0 887 722 A1**
(43) Veröffentlichungstag der Anmeldung: **30.12.1998**
(21) Anmeldenummer: 98810566.4
(22) Anmeldetag: 22.06.1998
(51) Int. Cl.: G05D 23/19, F24D 19/10

(54) **Verfahren und Vorrichtung zur Steuerung der Raumtemperatur**

(30) Priorität: 26.06.1997 CH 1547/97
(71) Anmelder: Energy Management Team AG, CH-8500 Frauenfeld (CH)
(72) Erfinder: Baldenweg, Urs, 8472 Seuzach (CH); Sauter, Beat, 8272 Ermatingen (CH)
(74) Vertreter: Gachnang, Hans Rudolf

(57) **Zusammenfassung**

Bei einem Verfahren zur Beeinflussung des Energieverbrauchs einer mit einer Steuervorrichtung (101) gesteuerten Last (127) werden mindestens eine primäre Messgrösse und mindestens eine sekundäre Messgrösse verarbeitet. Die sekundäre Messgrösse ist durch Benutzer beeinflussbar. Unter Mitwirkung von Sollgrössen werden die Messgrössen weiterverarbeitet. In einem Speicher kann in diesem Zusammenhang anfallende Information gespeichert werden. Die Messwerte werden unter Mitwirkung von derart gespeicherter Information so weiterverarbeitet, dass damit eine primäre Sollgrösse an spezifische Verhältnisse angepasst wird. Im weiteren wird anhand der Messgrössen, der Sollgrössen, und der gespeicherten Information eine Steuergrösse zur Steuerung der Last (127) ermittelt. Das Verfahren kann in verschiedenen Steuervorrichtungen (101) für beliebige Verbraucher angewendet werden. Bei maximalem Komfort wird der Energieverbrauch minimiert.

## Beschreibung

Die Erfindung betrifft ein Verfahren und eine Vorrichtung zur Beeinflussung des Energieverbrauchs einer Last nach dem Oberbegriff der Ansprüche 1 und 5.
Unter dem Begriff "Last" sind im allgemeinen beliebige energieabgebende oder energieaufnehmende Komponenten oder Systeme, wie zum Beispiel Heizkörper, Glühbirnen, Kompressoren, Klimaanlagen, Pumpen, Heizbänder, Kühlschränke, Verkaufsautomaten, Bildschirme etc. zu verstehen; im speziellen werden damit Komponenten oder Systeme bezeichnet, deren Zweck die Abgabe oder Aufnahme von Wärme ist.
Für die Beheizung von Räumen gibt es verschiedene Systeme. Weit verbreitet sind Zentralheizungen, bei denen Wasser als Wärmeträger eingesetzt wird. Das Wasser wird zentral in einer Heizanlage erwärmt und anschliessend über ein Leitungssystem zu den einzelnen Räumen geleitet. Dort wird die Wärme entweder über Heizkörper direkt an die Luft oder über ein Rohrsystem an den Boden abgegeben. Die Regulierung der Raumtemperatur erfolgt hauptsächlich über Ventile, die den Wasserstrom beeinflussen. Es sind verschiedene Methoden bekannt, wie die Ventileinstellung verändert werden kann. Am einfachsten ist die manuelle Einstellung einer bestimmten Durchflussmenge mit einem Handrad. Die Durchflussmenge ist in diesem Fall unabhängig von der aktuellen Raumtemperatur. Bei einer festen Ventileinstellung ändert sich somit die Raumtemperatur stark in Abhängigkeit von Fremdwärme und Wärmeverlusten an die Umgebung.
Die Verwendung von passiven Thermostatventilen bringt diesbezüglich eine Verbesserung. Am Ventilkopf kann die gewünschte Raumtemperatur eingestellt werden. In Abhängigkeit der tatsächlichen Raumtemperatur reguliert das Thermostatventil die Durchflussmenge des Wassers so, dass die Raumtemperatur unabhängig von Fremdwärme und Wärmeverlusten möglichst konstant gehalten wird.
Allerdings haben Thermostatventile den Nachteil, dass die eingestellte Solltemperatur immer gleich bleibt. Wenn ein Raum regelmässig während längerer Zeit nicht benutzt wird und die Temperatur auf dem eingestellten Komfortwert bleibt, bedeutet dies unnötigen Energieverbrauch und unnötig hohe Heizkosten. Ein weiterer Nachteil von Thermostatventilen ist die fehlende Abstimmung mit der zentral gesteuerten Vorlauftemperaturregelung des Heizsystems. Häufig wird nämlich während der Nacht die Vorlauftemperatur reduziert. Durch die geringere Heizleistung soll eine Energieeinsparung erzielt werden. Als Reaktion darauf öffnet das Thermostatventil und kompensiert die tiefere Heizleistung mit einer grösseren Durchflussmenge. Die Raumtemperatur wird somit nur unwesentlich verändert.
Eine weitere Möglichkeit zur Veränderung des Ventilzustandes besteht in der Verwendung von elektrischen Stellantrieben. Solche Stellantriebe werden von einem Steuergerät in Abhängigkeit von einer oder mehreren Messgrössen kontrolliert. Ein Beispiel für solche Steuergeräte sind einfache Raumthermostaten, die beim Über- oder Unterschreiten einer vorgegebenen Solltemperatur einen elektrischen Kontakt öffnen bzw. schliessen. Solche Raumthermostaten haben - wie die Thermostatventile - den Nachteil, dass der eingestellte Temperatursollwert unabhängig davon ist, ob der Raum benutzt wird, oder nicht. Ein weiteres Beispiel für ein Steuergerät wird im "handbuch der elektrischen Raumheizung"; Peter Borstelmann, Peter Rohne; 7. Auflage, 1993; Verlag Hüthig, auf Seite 180 vorgestellt, nämlich ein Raumthermostat mit integrierter Schaltuhr. Bei einem solchen Uhrenthermostaten können verschiedene Zeitperioden programmiert werden, während denen ein tieferer Temperatursollwert gilt. Wenn ein Raum regelmässig zu gewissen Zeiten nicht benutzt ist, kann so die Raumtemperatur reduziert und unnötiger Energieverbrauch verhindert werden. Allerdings haben Uhrenthermostaten auch gewisse Nachteile: Die Programmierung ist oft sehr umständlich und schwer verständlich; die Benutzungszeiten eines Raumes sind meistens nur ungenügend bekannt; und wenn sich der Benutzungsrhythmus ändert, müssen die Zeiten immer wieder neu programmiert werden. Anstelle eines Uhrenthermostaten kann auch ein Präsenzmelder zur Anpassung des Temperatursollwertes eingesetzt werden. Ein solches Steuergerät wird in der Produktebeschreibung (CM1N1751D, September 1995) für das Raumgerät "QAA14" der Firma Landis und Gyr (Europe) Corp. beschrieben. Bei diesem Gerät erfolgt eine Umschaltung zwischen zwei verschiedenen Temperatursollwerten mit einer vorgegebenen zeitlichen Verzögerung bezüglich der aktuell registrierten Personenpräsenz. Bei diesem Gerät müssen im Gegensatz zu Uhrenthermostaten keine Zeiten programmiert werden. Dennoch haben auch solche Raumgeräte einen wesentlichen Nachteil: Die Umschaltung zwischen den Temperatursollwerten erfolgt erst, nachdem eine Aenderung bei der Personenpräsenz festgestellt wurde. Mit dem Aufheizen eines Raumes wird also erst begonnen, nachdem die Präsenz von Personen registriert wurde und der Raum ist bei der ersten Benutzung nach einer längeren Pause jedesmal kalt.

Die Aufgabe der vorliegenden Erfindung ist es nun, ein Verfahren anzugeben und eine Vorrichtung zu schaffen, mit denen die Raumtemperatur automatisch in Abhängigkeit der zu erwartenden Raumbenutzung gesteuert wird.
Diese Aufgabe wird gelöst durch Verfahren und Vorrichtung, wie sie in den Patentansprüchen 1 und 5 definiert sind. Das erfindungsgemässe Verfahren und die erfindungsgemässe Steuervorrichtung beruhen auf einem Lernprozess. Dabei wird die Benutzung einer Last durch Personen in Abhängigkeit einer primären Messgrösse erfasst, also zum Beispiel die Präsenz von Personen in einem Raum in Abhängigkeit der Zeit. Aufgrund dieser Information werden die typischen Benutzungszeiten ermittelt und laufend aktualisiert. Mit einer variablen oder festen Vorlaufzeit vor den Präsenzzeiten wird der Temperatursollwert erhöht, sodass der Raum schon warm ist, wenn er voraussichtlich benutzt wird. Analog dazu kann der Temperatursollwert vor dem erwarteten Ende von Präsenzzeiten reduziert werden. Bei der Ermittlung der geeigneten Zeiten für die verschiedenen Temperatursollwerte wird also nebst der momentan registrierten Personenpräsenz auch die voraussichtliche zukünftige Personenpräsenz mitberücksichtigt. Der Vorteil dieses Verfahrens liegt darin, dass die Zeiten für die verschiedenen Temperatursollwerte ohne zusätzliches manuelles Programmieren laufend optimiert werden. Dadurch wird einerseits der Benutzungskomfort maximiert und andererseits der Energieverbrauch minimiert. Das erfindungsgemässe Verfahren beschränkt sich nicht nur auf Zentralheizungen mit Wasser als Wärmeträger, sondern kann bei beliebigen Heiz- oder Kühlsystemen eingesetzt werden, beispielsweise bei Begleitheizungen für Warmwasserleitungen, bei diversen weiteren elektrischen Heizvorrichtungen oder bei Klimaanlagen. Der erfinderische Gedanke umfasst auch viele weiteren Anwendungen, bei denen träge Prozesse, wie zum Beispiel die Aufladung eines Energiespeichers, die Umwälzung von Luft in einem Gebäude oder von Wasser in einem Schwimmbad, in Abhängigkeit der Nutzung durch Personen gesteuert werden sollen.
Das erfindungsgemässe Verfahren und die erfindungsgemässe Vorrichtung werden anhand einiger Beispiele und anhand der folgenden Figuren, die beispielhafte Ausführungsformen zeigen, detailliert beschrieben. Dabei zeigen:
- **Figur 1**: Eine beispielhafte Ausführungsform der erfindungsgemässen Steuervorrichtung
- **Figur 2**: Ein Schema zur Veranschaulichung der Verarbeitung von Messgrössen zu Steuergrössen
- **Figur 3**: Eine beispielhafte Anordnung für die erfindungsgemässe Steuervorrichtung in Verbindung mit einem 2-Punkt-Thermostaten
- **Figur 4**: Eine beispielhafte Anordnung für die erfindungsgemässe Steuervorrichtung mit integriertem Temperatursensor
- **Figur 5**: Eine weitere beispielhafte Anordnung für die erfindungsgemässe Steuervorrichtung mit integriertem Temperatursensor und integriertem Präsenzmelder
- **Figur 6**: Eine beispielhafte Ausführungsform der erfindungsgemässen Steuervorrichtung in Verbindung mit einem elektrischen Heizstab
- **Figur 7**: Eine beispielhafte Anordnung zur Steuerung eines Heizkörperventils
- **Figur 8**: Eine beispielhafte Anordnung zur Steuerung einer elektrischen Fussbodenheizung
- **Figur 9**: Eine beispielhafte Anordnung zur Steuerung einer Klimaanlage
- **Figur 10**: Eine beispielhafte Anordnung zur Steuerung eines Handtuchradiators mit der erfindungsgemässen Steuervorrichtung
- **Figur 11**: Eine spezielle Ausführungsform der erfindungsgemässen Steuervorrichtung mit externem Präsenzmelder und kabelloser Datenübertragung
- **Figur 12**: Ein beispielhaftes Schema zur Veranschaulichung des erfindungsgemässen Verfahrens zur Steuerung der Raumtemperatur.
- **Figur 13**: Ein weiteres Schema zur Illustration des erfindungsgemässen Verfahrens.
- **Figur 14**: Ein beispielhaftes Schema zur Veranschaulichung des erfindungsgemässen Verfahrens zur Steuerung der Raumtemperatur.

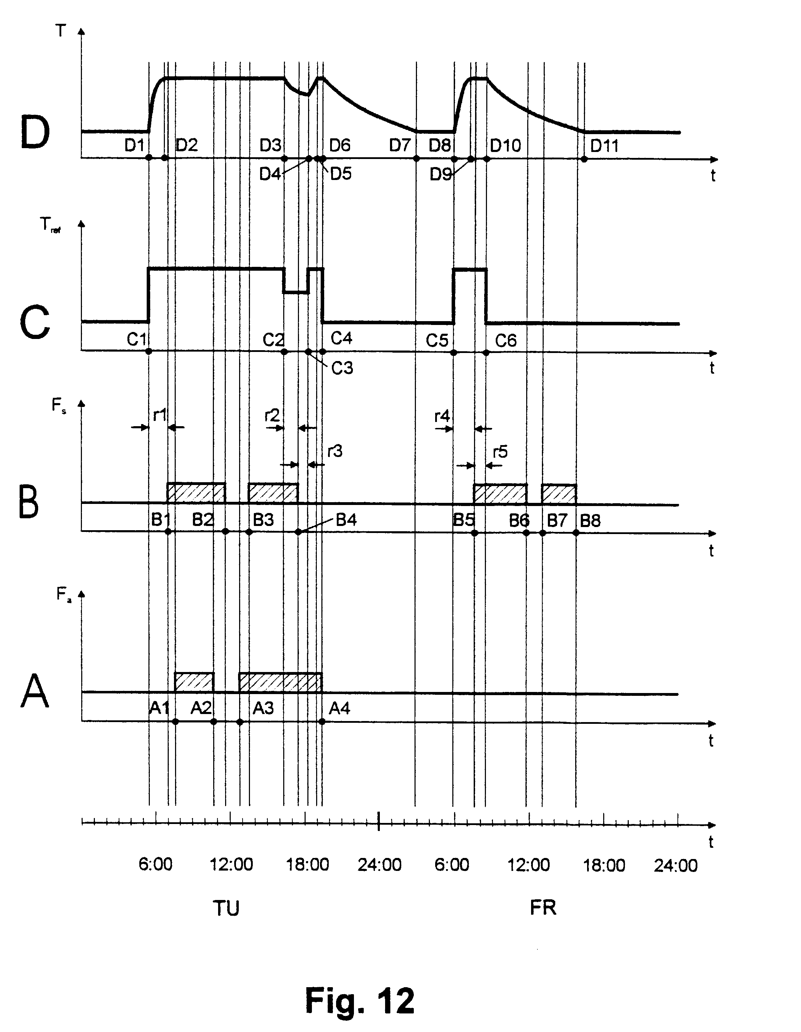

Wie bereits eingangs erwähnt, gibt es verschiedene Methoden, wie die Temperatur in einem Raum beeinflusst werden kann. Diese Methoden haben allerdings gewisse Nachteile. Im folgenden werden beispielhaft einige vorzugsweise Ausführungsformen der erfindungsgemässen Steuervorrichtung 101 zur Steuerung der Raumtemperatur beschrieben, die ohne die Nachteile der herkömmlichen Systeme funktionieren.

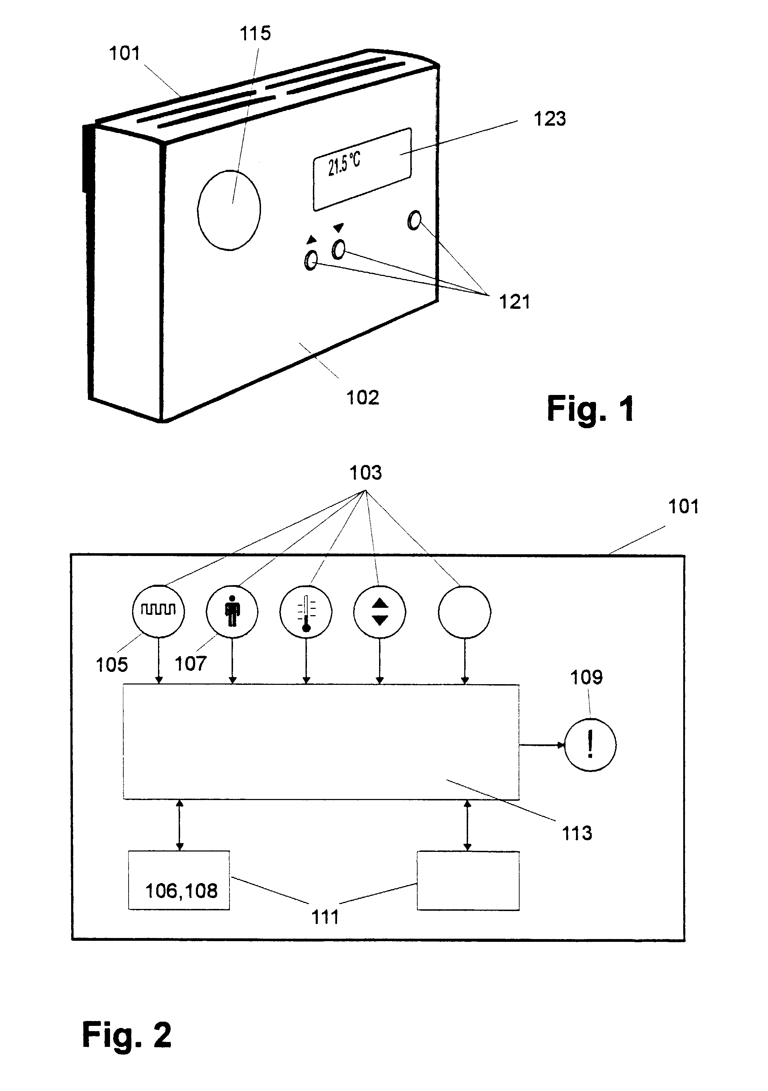

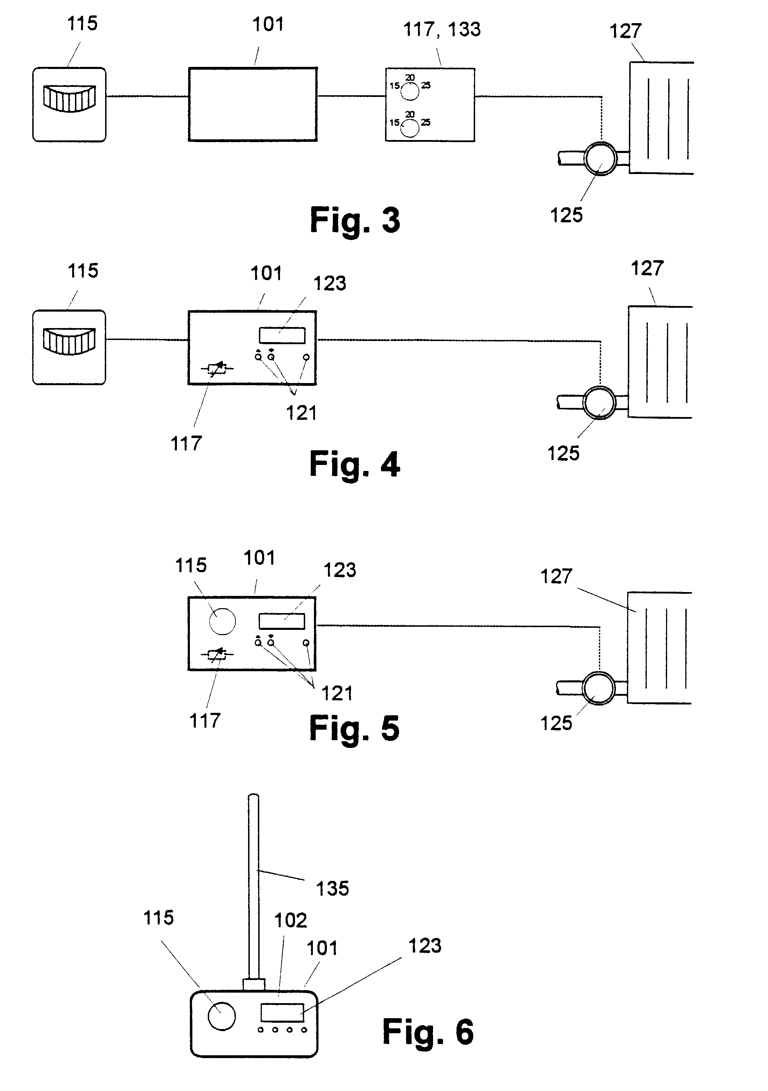

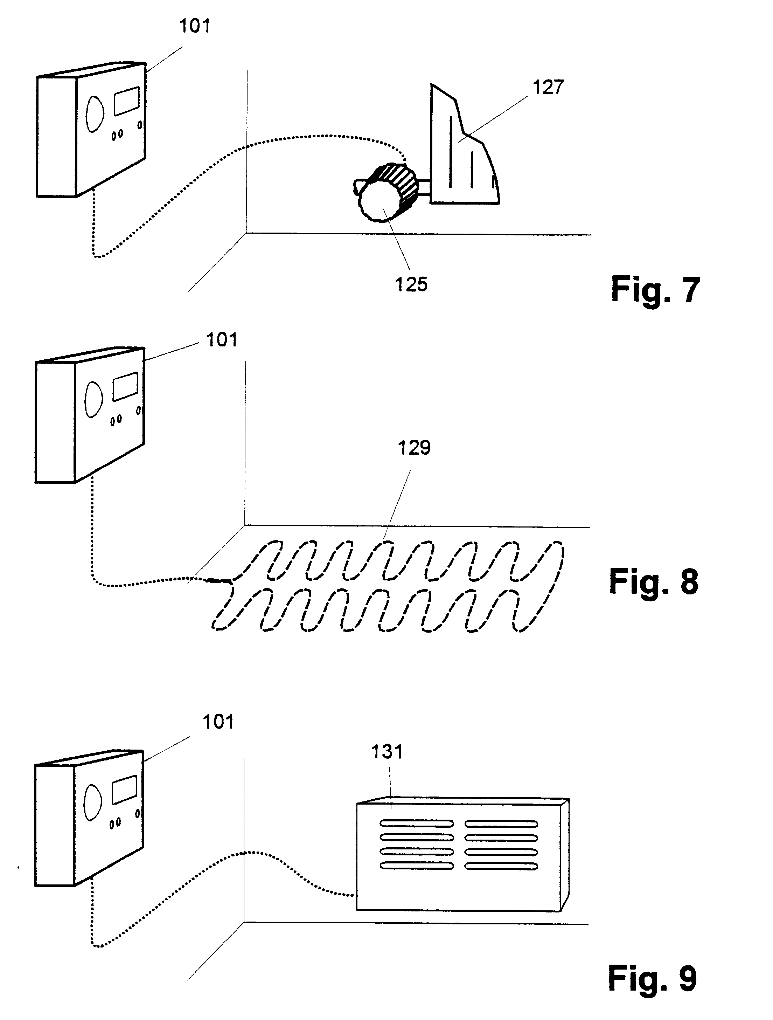

Figur 1 zeigt eine bevorzugte Variante der Steuervorrichtung 101 zur Regelung der Temperatur in einem Raum. Die Steuervorrichtung 101 umfasst Mittel 121 zur manuellen Eingabe von Steuerparametern. Nachfolgend sind einige Beispiele für solche Steuerparameter angegeben: Temperatursollwerte für benutzten und unbenutzten Raum; Vorgabewert für die vorzeitige Umschaltung des Temperatursollwertes von Spartemperatur aufKomforttemperatur vor einer erwarteten Raumbenutzung; ausserordentliche Raumbenutzungszeit; Betriebsmodus. Auf einer Anzeige 123 werden Informationen dargestellt, die während des Betriebes oder zur Veränderung von Steuerparametern benötigt werden. Im weiteren umfasst die Steuervorrichtung 101 einen Präsenzdetektor 115, beispielsweise einen Passiv-Infrarot-Bewegungsmelder, zur Erfassung von anwesenden Personen. Ausserdem kann die Steuervorrichtung 101 mit einem integrierten Temperatursensor 117 (in Figur 1 nicht dargestellt) die aktuelle Raumtemperatur messen. In Figur 5 wird eine beispielhafte Anordnung für die bevorzugte Ausführungsform der Steuervorrichtung 101 gezeigt, wobei die Steuervorrichtung 101 auf einen Stellantrieb 125 wirkt, mit dem die Energiezufuhr zu einem Heizkörper 127 kontrolliert werden kann. Figur 7 zeigt eine solche Anordnung in einem Raum, wobei eine Ecke des Raumes mit drei Linien dargestellt ist. Der Präsenzdetektor muss innerhalb des Raumes so angeordnet sein, dass er Personen im Raum erfassen kann. Je nachdem, wo das Steuergerät 101 innerhalb des Raumes angeordnet ist, ist es deshalb zweckmässig, den Präsenzdetektor 115 ausserhalb des Gehäuses 102 der Steuervorrichtung 101 anzubringen, wie dies in Figur 3 und Figur 4 dargestellt ist. Auch der Temperatursensor 117 kann in gewissen Situationen ausserhalb des Gehäuses 102 der Steuervorrichtung 101 angebracht werden. Dies ist insbesondere dann notwendig, wenn am Ort des Steuergerätes 101 die Temperatur nicht oder nur mit ungenügender Genauigkeit erfasst werden kann, wenn also beispielsweise das Steuergerät 101 im Bereich von Zugluft ist, oder wenn nicht die Raumtemperatur, sondern die Temperatur des Fussbodens erfasst werden muss. Figur 3 zeigt eine Anordnung mit dem Steuergerät 101 und mit einem externen Zweipunkt-Thermostaten
133. Am Zweipunkt-Thermostaten 133 können zwei Temperatursollwerte für Komforttemperatur und Energiespartemperatur eingestellt werden. Die Steuervorrichtung 101 liefert eine Steuergrösse 109, in deren Abhängigkeit zwischen den Temperatursollwerten umgeschaltet wird.
Anhand der Figuren 2, 12, 13 und 14 wird im folgenden das erfindungsgemässe Verfahren für die Steuervorrichtung 101 genauer beschrieben.
Wie in Figur 2 dargestellt, verarbeitet die Steuervorrichtung 101 Messgrössen 103, wie zum Beispiel Uhrzeit, Personenpräsenz im Raum, Temperatur oder manuelle Vorgabe von Steuerparametern, zu einer Steuergrösse 109 für die Last 127, 129, 131, 135, 137. Das erfindungsgemässe Verfahren beruht darauf, dass der Energiefluss zur Last 127, 129, 131, 135, 137 automatisch mit Hilfe der Steuervorrichtung 101 gesteuert wird, indem mindestens eine primäre Messgrösse 105 und mindestens eine primäre Sollgrösse 106 zu einer Steuergrösse 109 für die Steuerung des Energieflusses zur Last 127, 129, 131, 135, 137 verarbeitet werden. Die primäre Sollgrösse 106 bildet ein Kriterium zur Beurteilung der primären Messgrösse 105. Die Steuervorrichtung 101 kann die primäre Sollgrösse 106 automatisch verändern und so an spezifische Verhältnisse anpassen, dass der Energieverbrauch minimal und der Komfort noch genügend hoch ist. Um dies zu ermöglichen, liefert eine sekundäre Messgrösse 107 Information an die Steuervorrichtung 101, ob die Last 127, 129, 131, 135, 137 benutzt wird oder nicht. Im vorliegenden Beispiel der Steuerung der Raumtemperatur mit der Steuervorrichtung 101 ist die Zeit eine primäre Messgrösse 105, in deren Abhängigkeit der Temperatursollwert eingestellt wird. Die Steuervorrichtung 101 ermittelt erfindungsgemäss als primäre Sollgrösse 106 die geeigneten Ein-, Aus- oder Umschaltzeiten für verschiedene Temperatursollwerte. Wenn der Raum voraussichtlich oder tatsächlich benutzt wird, wählt die Steuervorrichtung 101 einen höheren Temperatursollwert, als wenn der Raum nicht benutzt wird, oder voraussichtlich in naher Zukunft nicht mehr benutzt wird. Die Information über die aktuelle Raumbenutzung bezieht die Steuervorrichtung 101 von einem Präsenzdetektor 115, beispielsweise von einem Passiv-Infrarot-Bewegungsmelder. Die Signale des Präsenzdetektors 115 sind eine sekundäre Messgrösse 107 und werden von der Steuervorrichtung 101 ausgewertet, indem sie mit einem Referenzwert als sekundärer Sollgrösse 108 verglichen werden. Wenn die Temperatursollwerte ausschliesslich aufgrund der aktuellen Signale des Präsenzdetektors 115 vorgegeben würden, dann wäre der Raum bei der ersten Benutzung nach einer längeren Pause noch kalt. Die Steuervorrichtung 101 speichert deshalb in einem Speichermedium 111 Informationen über die Benutzung des Raumes zu verschiedenen Zeiten innerhalb typischer Benutzungsintervalle, wie zum Beispiel eines Tages oder einer Woche. Die Ein-, Aus- oder Umschaltung des Temperatursollwertes erfolgt erfindungsgemäss nicht nur aufgrund der aktuellen Signale des Präsenzmelders 115, sondern auch in Abhängigkeit der aufgrund der gespeicherten Informationen zu erwartenden Raumbenutzungszeiten.
Anhand der Figur 12 wird im folgenden beispielhaft gezeigt, wie sich die aktuellen Signale des Präsenzmelders 113 und die gespeicherten Informationen über die Raumbenutzung auf den aktuellen Temperatursollwert und die aktuelle Raumtemperatur auswirken können. Als typische Benutzungsperiode wird eine Woche mit sieben Tagen vorausgesetzt. Für die beiden Wochentage Donnerstag und Freitag sind in den Diagrammen A, B, C und D verschiedene Grössen in Abhängigkeit der Uhrzeit dargestellt. Diagramm A zeigt die aktuelle, vom Präsenzdetektor 115 registrierte Raumbenutzung während der Intervalle A1-A2 und A3-A4. Diagramm B zeigt die gespeicherte Information über die Raumbenutzung während der Intervalle B1-B2, B3-B4, B5-B6 und B7-B8 für den entsprechenden Zeitausschnitt in früheren Benutzungsperioden. In den beiden Diagrammen A und B werden lediglich zwei Zustände unterschieden, nämlich "Raum benutzt" und "Raum nicht benutzt". In den meisten Fällen genügt diese Information. In gewissen Fällen ist aber mehr Information über die Art der Raumbenutzung erforderlich. Dies ist ohne weiteres möglich, wenn beispielsweise die Benutzungsperiode in viele kleine Teilintervalle unterteilt wird, und für jedes dieser Teilintervalle ein Wert angegeben wird, der die Benutzungsfrequenz innerhalb des Teilintervalles mit genügend hoher Auflösung darstellt. In Diagramm C ist der zeitliche Verlauf des aktuellen Temperatursollwertes aufgezeichnet, wie er sich aufgrund der aktuellen Signale des Präsenzdetektors 115 und aufgrund der gespeicherten Informationen über die Signale des Präsenzdetektors 115 in früheren Benutzungsperioden ergibt. Diagramm D zeigt schliesslich den zeitlichen Verlauf der aktuellen Raumtemperatur in Abhängigkeit der zu verschiedenen Zeiten vorgegebenen Temperatursollwerte. Mit C1, D1, D2, B1, A1, A2, B2, A3, B3, C2, D3, B4, C3, D4, D5, A4, C4, D6, D7, C5, D8, D9, B5, C6, D10, B6, B7, B8, und D11 werden charakteristische Zeitpunkte für die einzelnen Diagramme in ihrer zeitlichen Reihenfolge gekennzeichnet. Einige Zeitdifferenzen zwischen solchen charakteristischen Zeitpunkten sind speziell gekennzeichnet, wobei r1 = C1 - B1, r2 = C2 - B4, r3 = C3 - B4, r4 = C5 - B5, r5 = C6-B5.
Im folgenden wird beschrieben, wie die Steuervorrichtung 101 die Zeiten für die verschiedenen Temperatursollwerte an die spezifischen Verhältnisse anpasst. Bis zum Zeitpunkt C1 gilt ein niedriger Temperatursollwert, der fortan als Spartemperatur bezeichnet wird. Die Raumtemperatur entspricht der Spartemperatur. Bei C1 wird der Temperatursollwert erhöht auf ein Temperaturniveau, das fortan als "Komforttemperatur" bezeichnet wird. Diese Erhöhung findet statt, weil nach einer vorgegebenen Dauer -r1 bei B1 aufgrund der gespeicherten Informationen eine Benutzung des Raumes wahrscheinlich ist. Die Temperatur steigt und erreicht bei D2 rechtzeitig das Komfortniveau, bevor bei A1 die ersten Personen registriert werden. Ueber Mittag wird der Raum erwartungsgemäss zwischen B2 und B3 und tatsächlich zwischen A2 und A3 nicht benutzt. Die Mittagspause ist aber so kurz, dass sich eine Absenkung des Temperatursollwertes kaum auswirken würde. Der Temperatursollwert bleibt deshalb bis C2 auf dem Komfortniveau. Dort wird nach einer vorgegebenen Dauer -r2 bei B4 das Ende der Raumbenutzung erwartet. Der Temperatursollwert wird bei C2 auf einen Wert zwischen Komfort- und Spartemperatur eingestellt. Dadurch wird verhindert, dass sich der Raum zu stark abkühlt, solange sich noch Personen darin aufhalten. Da nach einer vorgegebenen Verzögerungszeit r3 nach dem erwarteten Benutzungsende B4 immer noch Personen registriert werden, wird bei C3 der Temperatursollwert wieder auf Komforttemperatur angehoben. Erst nachdem der Präsenzdetektor bei A4 keine Personen mehr erkennen kann, wird der Temperatursollwert bei C4 auf Spartemperatur gesetzt. Die Raumtemperatur sinkt langsam ab und erreicht bei D7 das Niveau der Spartemperatur. Bei C5 wird wiederum mit einer Vorlaufzeit -r4 (oder, anders ausgedrückt, mit einer negativen Verzögerungszeit) bezüglich der nächsten erwarteten Raumbenutzung bei B5 der Temperatursollwert auf Komfortniveau angehoben. Allerdings wird der Raum an diesem Tag ausnahmsweise nicht benutzt: Mit einer Verzögerungszeit r5 nach der erwarteten Raumbenutzung bei B5 stellt der Bewegungsmelder 115 keine aktuelle Personenpräsenz fest. Deshalb wird der Temperatursollwert bei C6 wieder auf Spartemperatur gesetzt.

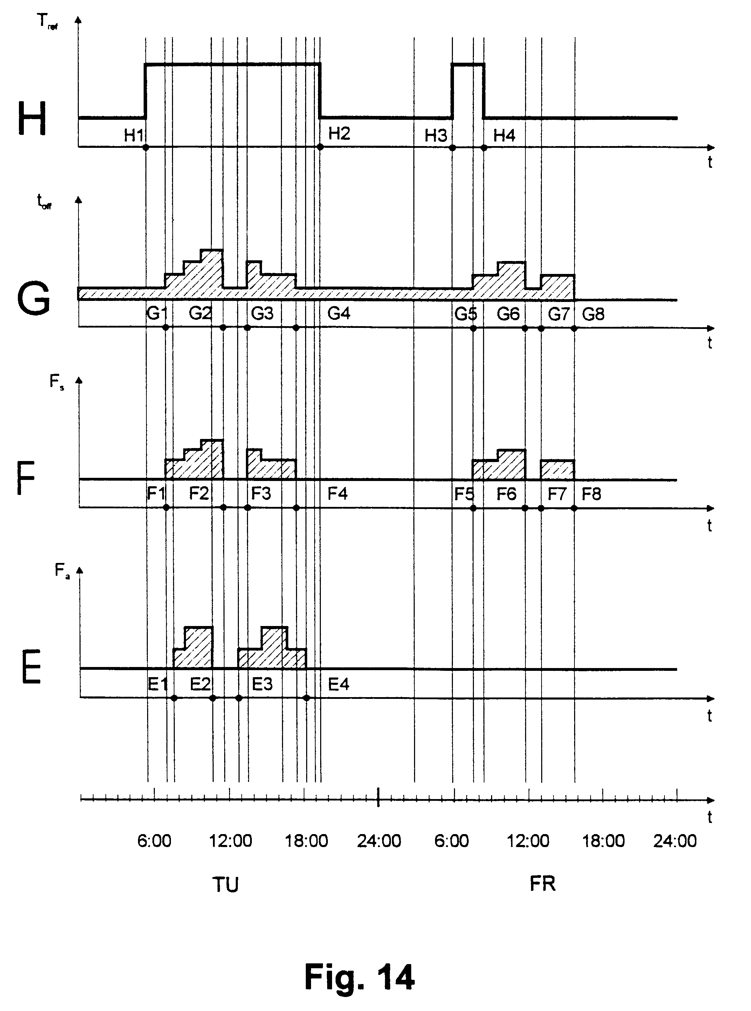

Aus der vorhergehenden Beschreibung ist ersichtlich, dass die Zeiten für die Aenderung des Temperatursollwertes mit einer (negativen) zeitlichen Verzögerung bezüglich der zu erwartenden Raumbenutzungszeiten erfolgen und zusätzlich von der aktuellen Raumbenutzung zur entsprechenden Zeit abhängen. Diese Verzögerungszeiten können sich aber auch ändern, können sogar positiv sein, wie aus dem Verhalten bei B2 erkennbar ist. Dort bleibt der Temperatursollwert auf Komforttemperatur, weil bei B3 eine weitere Benutzung des Raumes wahrscheinlich ist. Anstelle der Umschaltzeiten für die Temperatursollwerte, kann die primäre Sollgrösse 106 auch als zeitabhängige Verzögerungszeit t_{off} (t) für das Umschalten des Temperatursollwertes ermittelt werden, wie dies in Figur 14 beispielhaft dargestellt ist. Dabei wird die Verzögerungszeit von der Steuervorrichtung 101 aus ermittelten und gespeicherten Benutzungsfrequenzen, welche eine sekundäre Messgrösse 107 darstellen, und aus für bestimmte Benutzungsfrequenzen vorgegebenen, sinnvollen Verzögerungszeiten, welche eine sekundäre Sollgrösse 108 darstellen, selbständig ermittelt und so an die spezifischen Bedürfnisse durch diesen Lernvorgang angepasst. Das heisst mit anderen Worten, die Steuervorrichtung 101 wird anhand ihrer registrierten "Erfahrung" über den Verlauf der Benutzungsfrequenz die Umschaltverzögerung beispielsweise in Zeiten hoher und mittlerer Benutzungsfrequenz derart einstellen, dass der Temperatursollwert auf Komforttemperatur bleibt, und wird die Verzögerungszeit in Zeiten kleiner Benutzungsfrequenz auf ein Minimum setzen, sodass der Temperatursollwert schon nach kurzer Zeit auf Spartemperatur gesetzt wird. Bei den Diagrammen in Figur 14 sind für die zwei Tage Donnerstag und Freitag verschiedene Informationen in Abhängigkeit der Zeit dargestellt, wobei einzelne charakteristische Zeitpunkte mit Punkten markiert und gekennzeichnet sind. Diagramm H zeigt den aktuellen Temperatursollwert. Im Diagramm G ist die Umschaltverzögerung t_{off} (t) für die Umschaltung des Temperatursollwertes von Komforttemperatur auf Spartemperatur angegeben. Im vorliegenden Beispiel wird diese Umschaltverzögerung t_{off} direkt aus den gespeicherten Benutzungsfrequenzen entsprechender früherer Zeitintervalle hergeleitet, die im Diagramm F dargestellt sind. Die Umschaltverzögerung bezieht sich auf die aktuelle Benutzungsfrequenz, die als sekundäre Messgrösse 107 vom Präsenzdetektor 115 erfasst wird und im Diagramm E abgebildet ist. Beim Zeitpunkt E4 wird also die entsprechende minimale Umschaltverzögerung t_{off} (E4) abgewartet, bis der Temperatursollwert bei H2 auf Spartemperatur umgestellt wird. Die Umstellung des Temperatursollwertes von Spartemperatur auf Komforttemperatur bei H1 und H3 erfolgt mit einer Vorlaufzeit (oder negativen zeitlichen Verzögerung) bezüglich der Zeitpunkte G1 und G5, wo die Umschaltverzögerung t_{off} bezüglich ihres Minimalwertes grösser wird. Zwischen G2 und G3 ändert sich der Temperatursollwert nicht, weil die Umschaltverzögerung t_{off} und die Vorlaufzeit vor der erwarteten Raumbenutzung bei F3 zusammen grösser sind als die Zeitperiode zwischen G2 und G3.

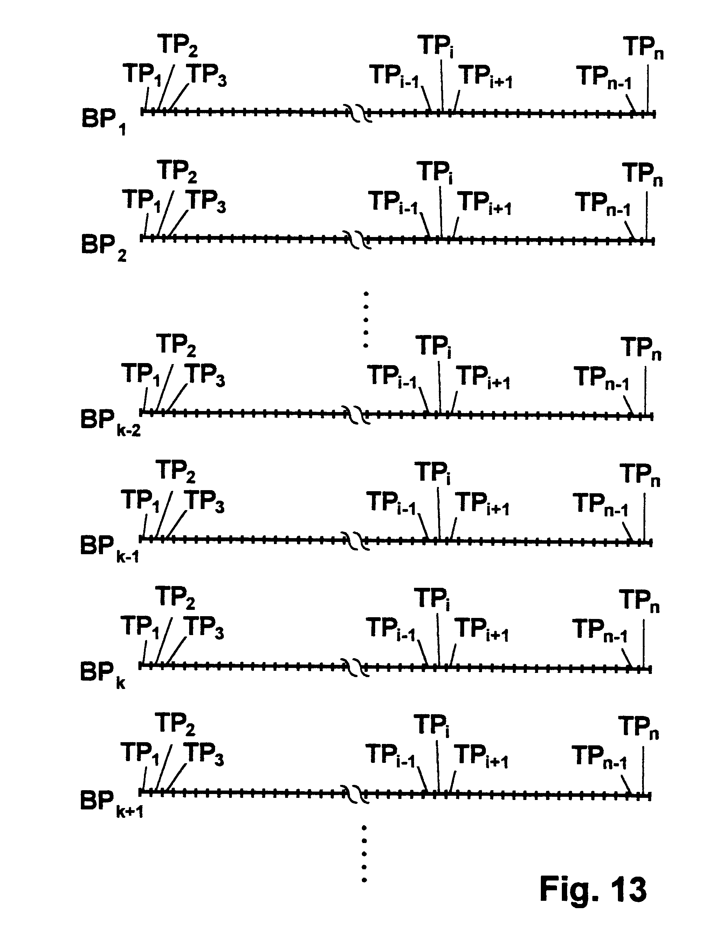

Figur 13 zeigt eine Methode, wie die Informationen über die Raumbenutzung zu verschiedenen Zeiten mit nur geringem Speicheraufwand gespeichert werden kann. Dies wird erreicht indem die zeitliche Auflösung der Steuervorrichtung an die gegebenen Verhältnisse angepasst wird. Verschiedene aufeinanderfolgende Benutzungsperioden BP₁, BP₂,..., BPₖ₋₂, BPₖ₋₁, BPₖ, BPₖ₊₁,... sind in Figur 13 untereinander aufgezeichnet. Eine Benutzungsperiode ist beispielsweise ein Tag, eine Woche oder ein Monat. Jede dieser Benutzungsperioden ist in n gleiche Teilperioden TP₁, TP₂,..., TPₙ unterteilt. Als primäre Messgrösse 105 dient die Uhrzeit, die durch den Oszillator für den Systemtakt des Microcontrollers 113 generiert wird. Die Steuervorrichtung 101 unterteilt eine vorgegebene typische Benutzungsperiode BP, beispielsweise ein Tag oder eine Woche, in eine vorgegebene Anzahl n gleicher Teilperioden TP, wobei die Teilperioden so lange sein können, dass sie gerade noch der erforderlichen zeitlichen Auflösung der Steuervorrichtung 101 gerecht werden. Daraus ist ersichtlich, dass der Begriff "Uhrzeit" sehr umfassend zu verstehen ist, dass es sich dabei zum Beispiel um die Angabe einer Tageszeit, eines Zeitintervalls, einer Kennzeichnung für ein spezielles Zeitintervall innerhalb einer Menge von Zeitintervallen oder um eine ähnliche Zeitangabe handeln kann. Im vorliegenden Beispiel wird die Dauer von TP mit 15 Minuten festgelegt. Während zweier Benutzungsperioden BP wird für jedes Zeitintervall TP im Speicher 111 eine Information gespeichert, aus der hervorgeht, ob während des entsprechenden Intervalls die Präsenz von Personen registriert wurde. Wenn lediglich zwischen den beiden Zuständen "Raum benutzt" und "Raum nicht benutzt" unterschieden wird, kann die Information sehr kompakt mit nur einem Bit pro Teilperiode gespeichert werden. Alternativ kann auch für jede Teilperiode ein Wert gespeichert werden, der die Höhe der Benutzungsfrequenz während der Teilperiode angibt. Nach Ablauf der zwei Benutzungsperioden wiederholt sich der Vorgang, wobei die ältesten gespeicherten Informationen überschrieben werden.

Die Informationen über die Benutzungsfrequenzen des Raumes zu verschiedenen Tageszeiten werden in einem Speicher 111 gespeichert. Vorzugsweise wird dafür ein EEPROM verwendet, damit die Daten auch bei einem Stromausfall erhalten bleiben. Wenn für jede Teilperiode lediglich unterschieden wird, ob die Präsenz von Personen festgestellt wurde, oder nicht, dann kann die Raumbenutzungsinformation beispielsweise wie folgt im Speicher 111 abgelegt werden: Für jeden Tag werden zwölf 8-Bit-Zahlen gespeichert. Wenn diese Zahlen binär dargestellt und aneinandergereiht werden, repräsentiert jede Stelle eine Teilperiode. Eine Null gibt an, dass in der entsprechenden Teilperiode keine Personen registriert wurden, während eine Eins die Raumbenutzung während der Teilperiode angibt.

Wenn also der Präsenzdetektor 115 während einer Teilperiode die Anwesenheit von Personen registriert, schreibt die Steuervorrichtung 101 eine Benutzungsinformation für das entsprechende Teilintervall in den Speicher 111 und setzt den Temperatursollwert auf Komforttemperatur. Zu Beginn einer Teilperiode TPᵢ der aktuellen Benutzungsperiode BPₖ wird der Temperatursollwert ebenfalls auf Komforttemperatur gesetzt, falls in einer der vorangehenden Teilperioden TPᵢ₋₁, TPᵢ₋₂ oder TPᵢ₋₃ einer der früheren Benutzungsperioden BPₖ₋₁ oder BPₖ₋₂ eine Benutzung des Raumes stattgefunden hat. Die Umschaltung des Temperatursollwertes auf Spartemperatur kann beispielsweise immer dann erfolgen, wenn der Präsenzmelder während einer gewissen Verzögerungszeit keine Personen detektiert, wobei diese Verzögerungszeit davon abhängig ist, ob die Raumbenutzung aufgrund der gespeicherten Informationen wahrscheinlich ist oder nicht.
Offensichtlich lernt und optimiert die Steuervorrichtung 101 die Umschaltzeiten für den Temperatursollwert anhand der tatsächlichen Raumbenutzungszeiten. Gegenüber der Steuerung des Temperatursollwertes mit einer konventionellen Schaltuhr hat eine solche Steuervorrichtung 101 den Vorteil, dass keine Programmierung der Schaltzeiten notwendig ist, und dass die Schaltzeiten durch die Steuervorrichtung 101 selbständig ermittelt werden.
Ausserdem ist die erfindungsgemässe Steuervorrichtung 101 flexibel und passt die Umschaltzeiten automatisch an sich ändernde Benutzungsgewohnheiten an. Ebenso sind beispielsweise bei der Umstellung von Sommer- auf Winterzeit keine manuellen Eingriffe erforderlich. Das beschriebene Verfahren, bei dem die Umschaltzeiten als primäre Sollgrösse 106 an die spezifischen Begebenheiten angepasst werden, kann weiter verfeinert werden. So werden beispielsweise längere Benutzungspausen, wie sie etwa an Wochenenden oder bei Betriebsferien auftreten, von der Steuervorrichtung 101 erkannt, weil sich die aktuellen Informationen des Präsenzdetektors 115 von den zu erwartenden gespeicherten Informationen wesentilch unterscheiden. Dies erlaubt der Steuervorrichtung 101, sich auch in solchen Situationen an die tatsächlichen Verhältnisse anzupassen, indem etwa nach einem Wochenende der Temperatursollwert rechtzeitig auf Komforttemperatur gestellt wird, oder indem während der Betriebsferien der gespeicherte Benutzungsverlauf nicht gelöscht wird.

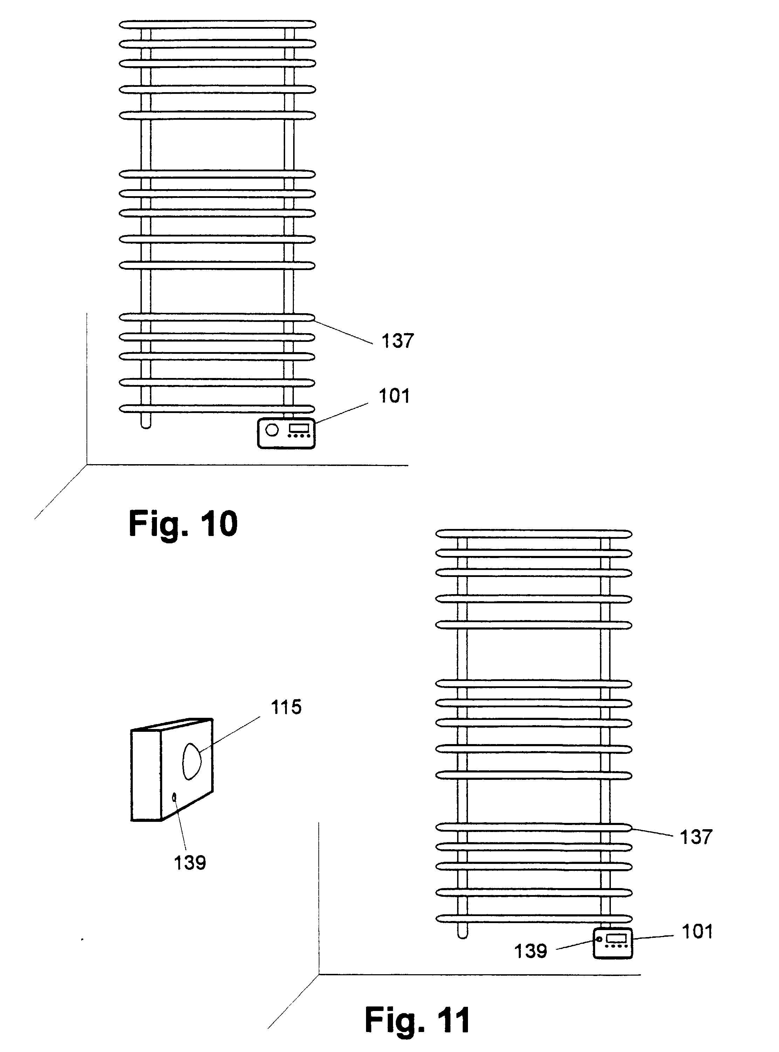

In den Figuren 8 und 9 sind zwei weitere beispielhafte Anwendungsmöglichkeiten für die erfindungsgemässe Steuervorrichtung 101 und das erfindungsgemässe Verfahren dargestellt. Bei Figur 8 wird die Steuervorrichtung 101 zur Steuerung einer elektrisch betriebenen Fussbodenheizung 129 benutzt. Die Steuergrösse 109 kontrolliert dabei über ein Stellglied (nicht sichtbar), beispielsweise ein Relais, direkt den Energiefluss für die Fussbodenheizung 129. Bei Figur 9 wird die Steuervorrichtung 101 dazu benutzt, eine Klimaanlage 131 in Abhängigkeit der zu erwartenden und der aktuellen Raumbenutzung zu steuern. Die Steuervorrichtung 101 kann in gewissen Fällen zusammen mit der zu steuernden Last 127, 129, 131, 135, 137 eine Einheit bilden. So kann die Steuervorrichtung zum Beispiel direkt in die zu steuernde Klimaanlage 131 integriert werden. In Figur 6 bildet die Steuervorrichtung 101 eine Einheit mit einem Heizstab 135. Solche Heizstäbe 135 werden beispielsweise bei Handtuchradiatoren 137 eingesetzt. Die Figur 10 zeigt einen solchen Handtuchradiator 137 mit Steuervorrichtung 101, wobei die erforderlichen Messgrössen 103 direkt im Steuergerät erfasst werden. Figur 11 zeigt eine weitere Ausführungsform der erfindungsgemässen Steuervorrichtung 101, wobei die Erfassung der Personenpräsenz im Raum mit einem externen Präsenzmelder 115 erfolgt, der über eine Infrarot-Kommunikationsschnittstelle 139 mit der Steuervorrichtung 101 in Verbindung steht. Bei einer weiteren Anwendung wird die erfindungsgemässe Steuervorrichtung 101 zur Steuerung von Begleitheizungen für Warmwasserleitungen benutzt. Solche elektrisch betriebenen Begleitheizungen werden bei längeren Brauchwarmwasserleitungen eingesetzt. Sie sind meistens selbstregulierend und halten die Wassertemperatur in den Leitungen auf einem akzeptablen Niveau, verhindern also die Auskühlung der Leitungen, wenn kein Wasser bezogen wird. In diesem Fall liefert beispielsweise ein Durchflusssensor Information über den Wasserverbrauch und dient somit als sekundäre Messgrösse 107. Die Steuervorrichtung 101 ermittelt als primäre Sollgrösse 106 die geeigneten Umschaltzeiten für einen Leistungssteller, mit dem die Heizleistung für die Begleitheizung beeinflusst wird. Während Zeiten, in denen regelmässig kein Warmwasser bezogen wird, oder in Zeiten, wo der Warmwasserkonsum genügend hoch ist, kann die Heizleistung der Begleitheizung reduziert werden.
Die erfindungsgemässe Steuervorrichtung 101 kann auch zur Kontrolle der Ladezeiten von Energiespeichern eingesetzt werden, wobei die gespeicherte Energiemenge automatisch an die zu erwartende Energienachfrage angepasst wird. So kann beispielsweise mit einer speziellen Ausführungsform der Steuervorrichtung 101 die Energiezufuhr zu einem Warmwasserspeicher kontrolliert werden. Falls solche Wasserspeicher mit elektrischer Energie beheizt werden, so geschieht dies meistens nachts, wobei die Heizung durch die Signale einer Rundsteuerung während einer festgelegten Zeitdauer eingeschaltet wird. Der Wasserspeicher wird dann solange beheizt, bis ein Sicherheitsthermostat beim Erreichen der Maximaltemperatur, oder die Rundsteuerung nach Ablauf der maximalen Ladezeit, die Stromzufuhr zu den Heizelementen unterbricht. Bei der Steuervorrichtung 101 dient wiederum die Zeit als primäre Messgrösse 105. Als sekundäre Messgrösse 107 dient das Signal eines Durchflusssensors, der sich in der Wasserzufuhrleitung für den Speicher befindet. Die Steuervorrichtung 101 registriert für jeden Wochentag die bezogene Wassermenge und berechnet als primäre Sollgrösse 106 die erforderliche Einschaltdauer für eine bedarfsgerechte Aufheizung des Wasserspeichers an jedem Wochentag. Warmwasserautomaten können als Variante der vorhergehend beschriebenen Wasserspeicher betrachtet werden. Sie verfügen über mindestens zwei verschiedene Heizelemente, die innerhalb des Speichers auf unterschiedlicher Höhe angebracht sind. Mit jedem Heizelement kann nur derjenige Teil des Speichers erwärmt werden, der sich oberhalb des Heizelementes befindet. So kann beispielsweise nur das Wasser im oberen Teil des Speichers geheizt werden, wenn nur das obere Heizelement benutzt wird. Die erfindungsgemässe Steuervorrichtung 101 kann also dazu benutzt werden, die geeigneten Zeiten für die bedarfsgerechte Aktivierung der einzelnen Heizelemente zu ermitteln. Der Anwendungsbereich für die erfindungsgemässe Steuervorrichtung 101 und das erfindungsgemässe Verfahren ist sehr breit, sodass die hier beschriebenen speziellen Ausführungsformen und Verfahren lediglich beispielhaften Charakter haben und zum besseren Verständnis der Erfindung aufgeführt sind. Einer Fachperson ist ohne weiteres ersichtlich, dass sich der erfinderische Gedanke nicht nur auf die hier beschriebenen Anordnungen und Vorrichtungen beschränkt. Vielmehr umfasst der Sinn und Geist der vorliegenden Erfindung eine Vielzahl möglicher Anordnungen und Ausführungsformen.

## Patentansprüche

1. Verfahren zur Beeinflussung des Energieverbrauchs einer mit einer Steuervorrichtung gesteuerten Last (127,129,131, 135, 137), wobei durch die Steuervorrichtung mindestens eine primäre Messgrösse (105) mit mindestens einer primären Sollgrösse (106) zu mindestens einer Steuergrösse (109) verarbeitet wird, **dadurch gekennzeichnet,** dass im Zusammenhang mit der Benutzung der Last anfallende Information in einem Speichermedium (111) gespeichert wird, dass mindestens eine primäre Sollgrösse (106) an spezifische Begebenheiten angepasst wird, indem sie mittels einer Verarbeitung von mindestens einer vom Benutzer beeinflussbaren sekundären Messgrösse (107) mit mindestens einer sekundären Sollgrösse (108) verändert wird, und dass diese Verarbeitung unter Mitwirkung von im Speichermedium (111) gespeicherten Daten erfolgt.

2. Verfahren nach Anspruch 1, **dadurch gekennzeichnet**, dass Information über die Benutzungszeiten ermittelt und in einem Speichermedium (111) gespeichert wird, und dass eine Aenderung der primären Sollgrösse (106) mit positiver oder negativer zeitlicher Verzögerung in Bezug auf charakteristische Punkte bei den Benutzungszeiten erfolgt.

3. Verfahren nach einem der Ansprüche 1 oder 2, **dadurch gekennzeichnet**, dass eine primäre Messgrösse (105) die Uhrzeit, und eine primäre Sollgrösse (106) Ein-, Aus- oder Umschaltzeiten sind, und dass eine sekundäre Messgrösse (107) die Benutzungsfrequenz, und eine sekundäre Sollgrösse (108) ein Grenzwert der Benutzungsfrequenz ist.

4. Verfahren nach einem der Ansprüche 1, 2 oder 3, **dadurch gekennzeichnet**, dass eine primäre Messgrösse (105) die Uhrzeit, und eine primäre Sollgrösse (106) die Ein-, Aus- oder Umschaltverzögerung ist, und dass eine sekundäre Messgrösse (107) die Benutzungsfrequenz, und die zugehörige sekundäre Sollgrösse (108) eine Benutzungsfrequenz und Ein-, Aus- oder Umschaltverzögerung verbindende Funktion ist.

5. Vorrichtung zur Beeinflussung des Energieverbrauchs einer mit einer Steuervorrichtung gesteuerten Last (127, 129, 131, 135, 137), wobei durch die Steuervorrichtung mindestens eine primäre Messgrösse (105) mit mindestens einer primären Sollgrösse (106) zu mindestens einer Steuergrösse (109) verarbeitbar ist, **dadurch gekennzeichnet**, dass die Vorrichtung mindestens einen Prozessor (113) umfasst zum Anpassen von mindestens einer primären Sollgrösse (106) an spezifische Begebenheiten durch Verarbeitung von mindestens einer vom Benutzer beeinflussbaren sekundären Messgrösse (107) mit mindestens einer sekundären Sollgrösse (108), und dass die Vorrichtung weiter ein Speichermedium (111) umfasst zur Speicherung von Daten, die im Zusammenhang mit der Benutzung der Last anfallen oder bei der Verarbeitung mitbenutzt werden.

6. Vorrichtung nach Anspruch 5, **dadurch gekennzeichnet**, dass ein Oszillator die Zeit als primäre Messgrösse (105) generiert, dass die Anwesenheit von Personen in einem Raum als sekundäre Messgrösse (107) von einem Präsenzdetektor (115) erfassbar ist, und dass die Temperatur im Raum mit einem Temperatursensor (117) messbar ist.

7. Vorrichtung nach Anspruch 5, **dadurch gekennzeichnet**, dass ein Oszillator die Zeit als primäre Messgrösse (105) generiert, dass die Anwesenheit von Personen in einem Raum als sekundäre Messgrösse (107) von einem externen Präsenzdetektor (115) erfassbar ist, und dass die Steuervorrichtung (101) und der Präsenzdetektor (115) Mittel (139) für eine kabellose Datenübertragung umfassen.

8. Vorrichtung nach einem der Ansprüche 5, 6 oder 7, **dadurch gekennzeichnet**, dass ein Stellglied für die Beeinflussung der Energiezufuhr für einen Elektroheizstab (135) durch die Steuergrösse (109) beeinflussbar ist.

9. Vorrichtung nach Anspruch 5, **dadurch gekennzeichnet**, dass ein Oszillator die Zeit als primäre Messgrösse (105) generiert, dass der Bezug von Warmwasser durch Personen als sekundäre Messgrösse (107) von einem Durchflusssensor erfasst wird, und dass die Steuergrösse (109) auf ein Stellglied zur Beeinflussung der Heizleistung wirkt.

10. Vorrichtung nach einem der Ansprüche 5, 6, 7, 8 oder 9, **dadurch gekennzeichnet**, dass eine primäre Messgrösse (105) die Uhrzeit, und eine primäre Sollgrösse (106) Ein-, Aus- oder Umschaltzeiten sind, dass eine sekundäre Messgrösse (107) die Benutzungsfrequenz, und eine sekundäre Sollgrösse (108) ein Grenzwert der Benutzungsfrequenz ist, dass ein charakteristisches Benutzungsintervall vorgegeben ist, dass dieses Benutzungsintervall in Teilintervalle unterteilt ist, dass die Ueber- oder Unterschreitung des Grenzwertes für die Benutzungsfrequenz durch die Benutzungsfrequenz für jedes Teilintervall ermittelt wird, dass Informationen bezüglich Ueber- oder Unterschreitung des Grenzwertes der Benutzungsfrequenz während der Teilintervalle im Speichermedium (111) gespeichert werden, dass die Ein-, Aus- oder Umschaltzeiten in späteren Benutzungsintervallen anhand der im Speichermedium (111) gespeicherten Informationen festgelegt werden, dass die Ein-, Aus- oder Umschaltzeiten bei späteren Benutzungsintervallen innerhalb des Benutzungsintervalls früher oder später erfolgen, als sie bei der Registrierung der Ueber- oder Unterschreitung des Grenzwertes für die Benutzungsfrequenz innerhalb eines früheren Benutzungsintervalls tatsächlich aufgetreten sind, und dass bei wiederholtem Ausbleiben einer Benutzung in Teilintervallen, für die in einer früheren Benutzungsperiode der Grenzwert der Benutzungsfrequenz über-oder unterschritten wurde, die Aenderung der primären Sollgösse vorübergehend unterdrückt wird.
